# EUROPEAN PATENT APPLICATION

(11) **EP 1 737 221 A1**
(43) Date of publication of application: **27.12.2006**
(21) Application number: 05013604.3
(22) Date of filing: 23.06.2005
(51) Int. Cl.: H04N 5/445

(54) **Method and apparatus for adding background of auxiliary information of television program**

(71) Applicant: TECO Electric & Machinery Co., Ltd., Taipei City 104 (TW)
(72) Inventor: Wang, Houng-Jyh, Taipei City 104 (TW); Fang, Li, Taipei City 104 (TW); Yang, Zeng-Yuan, Taipei City 104 (TW)
(74) Representative: Urner, Peter

(57) **Abstract**

A method and an apparatus operative to add a background to auxiliary information such as an electronic program guide (EPG), content information (CI), and an on-screen display (OSD). Multiple static or dynamic image data is pre-stored in a storage device. When the user selects displaying specific information, the system automatically selects the image data overlapped under the auxiliary information as the background presentation.

## Description

### BACKGROUND OF THE INVENTION

The present invention relates in general to a television presentation, and more particularly, to a presentation of information display for multi-channel television broadcasting system.

The digitization of transmission and reception of television program causes the conventional analog televisions gradually replaced by digital televisions (DTV). Compared to the analog televisions, the digital televisions not only provide enhanced video and audio quality and have less interfered signal transmission, but also utilize bandwidth more effectively by means of digital compression technique. Therefore, auxiliary information can be provided in addition to the original audio and video content, so that the user can select program more easily and watch real-time static information optionally. The auxiliary information typically comprises an electronic program guide (EPG), content information (CI, or is also called data broadcasting) and an on-screen display (OSD). As a result, service information (SI) such as program table, real-time information including news, weather and stock market, and television setup and system information are provided by the digital televisions.

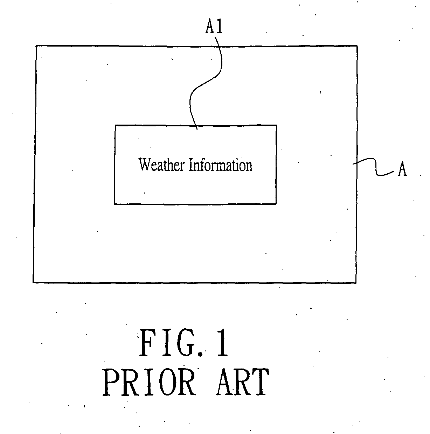

Referring to Fig.1, Fig.1 is a schematic diagram of the status of auxiliary information display according to the prior art. As shown in Figure 1, the conventional television set or set top box (STB) adapts an independent frame smaller than the screen to display the auxiliary information. The area between the screen margin (A) and the frame (A1) is either blue, green, or presents as a single-colored background. The screen appears very monotonic, and the user does not have any choice for changing the background color. In Figure 8 of US Patent No. 6, 243, 142, when the user selects a program from an electronic program guide, the image of the selected program is displayed at the background to allow the user to preview the program. However, the objective of this design is not for providing the electronic program guide a background, rather, it is due to functional consideration. Since the television programs are all motion pictures, the image superposition always looks complicate and messy. Furthermore, the corresponding background image cannot be provided when the television is displaying pure text content, such as content information (for example: teletext). That means, the prior art method for displaying the auxiliary information is insufficient. Therefore, it is very important to provide a method for displaying the auxiliary information adequately.

### SUMMARY OF THE INVENTION

The present invention is to provide a method and an apparatus for adding background to television program auxiliary information. A background is automatically added when the television is displaying auxiliary information such as an electronic program guide, content information, and an on-screen display. The background is automatically selected according to the content of the received content information and/or service information, so that the selected background and auxiliary information generated based on the content information and/or the service information and the user is currently watching can be simultaneously displayed. For example, a background with color indicating up and down of the stock market can be displayed on the page for showing the stock market, or a background including sun, cloud and rain drops can be designed as the background for the weather page.

A storage device is installed in a television. The storage device pre-stores a plurality of backgrounds. The storage-device is controlled by a background selection device, which receives content information and/or service information and selects a background related to the content information and/or service information. Auxiliary information generated based on the content information and/or the service information and the selected background are then sent to an image superposition device to perform image superposition and to generate an overlapped image. The overlapped image is thereafter input to the display screen to present the auxiliary information with the background.

### BRIEF DESCRIPTION OF THE DRAWINGS

The present invention will become more fully understood from the detailed description given hereinbelow illustration only, and thus are not limitative of the present invention, and wherein:
Fig.1 is a schematic diagram of the status of auxiliary information display according to the prior art;
Figure 2 is an apparatus block diagram for providing a background according to the present invention;
Fig.3 is a schematic diagram of the status of the auxiliary information display according to the present information; and
Fig.4 is a flow chart of the method for providing the background picture according to the present invention.

### DETAILED DESCRIPTION OF THE INVENTION

In a digital television broadcasting system, the signal transmitted from a television station comprises the audio and video content of a television program, content information, and service information. After the digital compression and multiplexing process, the signal is transmitted to a television or a set top box via satellite, terrestrial, cable, or wire- or wireless-network. The signal is then decompressed and demultiplexed by the television or the set top box into the original format, such that the user can select one of the program or the information carried by the signal. Alternatively, more than one program or information can be simultaneously displayed by picture-in-picture (PIP) or picture-out of-picture (POP) owing to digital image processing technique. Among the above-mentioned program and information, the audio and video content of the television program is the major part that the user watches. Therefore, it is usually referred as the "primary information", while the service information and the content information are usually referred as the "auxiliary information" so as to be distinguished from the primary information.

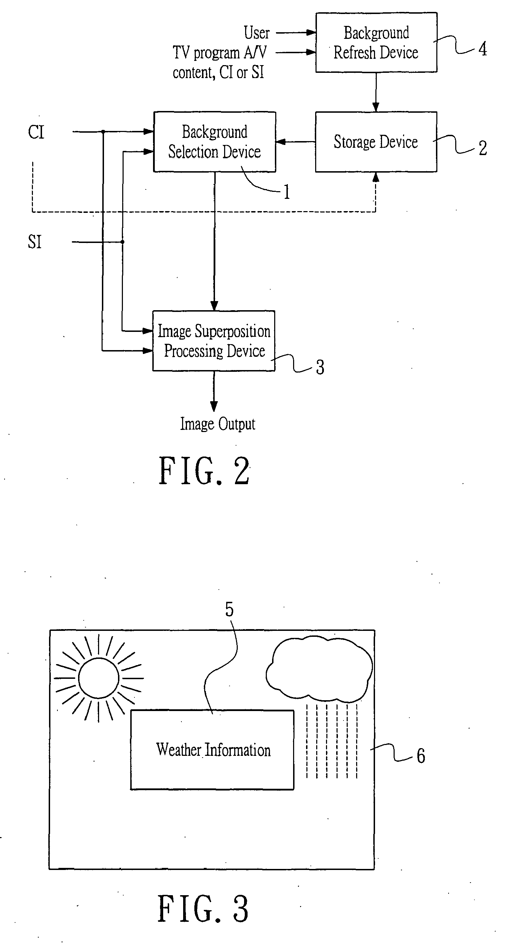

Referring to Fig. 2, Figure 2 is an apparatus block diagram for providing a background according to the present invention. As shown in Fig.2, a background selection device 1, a storage device 2, and an image superposition processing device 3 are installed in the television or the set top box, according to the present invention. The storage device 2 comprises a non-volatile memory for storing various types of background pictures. In order to be selected, each of the background pictures includes a text index or a number index. The background picture is either a static or a dynamic picture which includes but not limits to information related to weather or stock market. The background pictures may be pre-stored, or may be retrieved from the content information or the service information. The storage device 2 is controlled by the background selection device 1. The content information and/or the service information selected to be displayed by the user is input to the background selection device 1. The background selection device 1 then selects one of the background pictures related to or corresponding to the content of the received content information and/or service information, by utilizing at least one preset keyword provided by the received content information and/or service information and the above-mentioned text index or number index, from the storage device 2. The storage device 2 reads the selected background picture and input this background picture to an image superposition processing device 3. At the same time, auxiliary information which is based on the content information and/or the service information is input to the image superposition processing device 3 to superimpose the auxiliary information on the selected background picture. Actually, the auxiliary information may be the same as the content information and/or the service information. The superimposed image is then displayed by the screen. The user can thus view the auxiliary information with the related background picture. It is worth noting that the auxiliary information may be superimposed with more than one background picture. The superposition transparency of the auxiliary information and the background picture can be adjusted between 0% and 100%. When 0% transparency is selected, the display is in the PIP mode. When 100% transparency is selected, the background becomes the backdrop of the displayed information.

Please refer to Fig.3, Fig.3 is a schematic diagram of the status of the auxiliary information display according to the present information. As shown in Fig.3, weather information is presented in a frame 5 of a display screen 6 when the selected auxiliary information is weather information. The background picture, selected from the storage device 2 by the background selection device 1, is related to the displayed weather information. Under the circumstances, the displayed information has certain degree of relation with the background picture. In another example, when the stock market information is displayed, the background is in red or green showing the market or individual stock being up or down. When the electronic program guide is displayed, seasons or day/night scene may be presented by the background picture according to the current date or time. It will be appreciated that the background pictures are not limited to the examples as described above. As a matter of fact, the background picture can also be selected from any image totally unrelated to the selected information. For example, the background picture may be an image providing message or advertisement unrelated to the selected information.

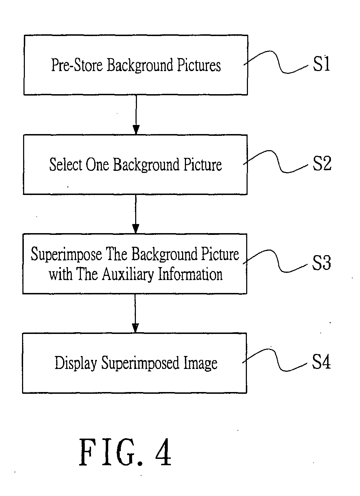

As shown in Fig.4 and Fig.2, a plurality of background pictures are pre-stored in the storage device 2, in step S1. In step S2, according to the content of the content information and/or the service information selected to be displayed by the user, one of the background pictures related to the content information and/or the service information is selected from the storage device 2 by the background selection device 1. In step S3, both the auxiliary information and the selected background picture are processed by the image superposition processing device 3 for image superposition. In step S4, the superposed image is finally displayed on the screen. As a result, the auxiliary information having the related background picture is provided.

Referring again to Figure 2, in order to increase the variety and real-time effect of the background pictures, a background refresh device 4 can be installed to allow the user to input customerized background pictures according to the present invention. Or the television stations are allowed to update the background pictures via the background refresh device 4 based on the video and audio content, the content information, or the service information. The television station is the provider which transmits the program content, the content information, and the service information to the TV users via satellite, terrestrial, cable, or wire- or wireless network.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An apparatus for adding background to television program information, comprising:
a storage device for pre-storing a plurality of backgrounds, each of the backgrounds having a corresponding index;
a background selection device, operative to select one of the backgrounds from the storage device related to information selected to be displayed by at least one user by utilizing the index; and
an image superposition device operative to superimpose the selected background with auxiliary information generated based on the selected information.

2. The apparatus of Claim 1, wherein the storage device comprises a non-volatile memory.

3. The apparatus of Claim 1, wherein the information selected to be displayed comprises content information or service information.

4. The apparatus of Claim 1, wherein the auxiliary information comprises content information or service information.

5. The apparatus of Claim 1, wherein the background selection device selects the selected background by relating at least one keyword provided by the selected information to the index.

6. The apparatus of Claim 1, wherein the image superposition device superimposes the selected information and the selected background with a superposition transparency between 0% and 100%.

7. The apparatus of Claim 1, wherein each of the backgrounds comprises a static picture.

8. The apparatus of Claim 1, wherein each of the backgrounds comprises a dynamic picture.

9. A method of displaying auxiliary information in a multi-channel television broadcasting system, comprising:
displaying the auxiliary information within a frame of a display screen; and
superimposing the auxiliary information with a background related to the auxiliary information.

10. The method of Claim 9, further comprising superimposing the auxiliary information and the background in a picture-in-picture (PIP) mode.

11. The method of Claim 9, further comprising superimposing the auxiliary information and the background with 100% transparency.

12. The method of Claim 9, further comprising selecting the background from a static picture.

13. The method of Claim 9, further comprising selecting the background from a dynamic picture.

14. A method of adding a background to television program auxiliary information, comprising:
pre-storing a plurality of backgrounds;
selecting a background related to information selected to be displayed by a user;
superimposing the selected background with auxiliary information generated based on the selected information; and
outputting a superimposed image of the selected background and the auxiliary information.

15. The method of Claim 14, wherein the method for pre-storing the plurality of backgrounds further comprises updating the pre-stored backgrounds by utilizing a background refresh device.

16. The method of Claim 15, wherein the method for updating the pre-stored backgrounds further comprises inputting more backgrounds to the background refresh device by the user.

17. The method of Claim 15, wherein television stations are allowed to update the pre-stored backgrounds via the background refresh device according to first information, and the first information comprises primary information or auxiliary information.
